(19) 

Europäisches
Patentamt
European
Patent Office
Office européen
des brevets

(11) **EP 2 803 941 A1**

(12) **EUROPEAN PATENT APPLICATION**
published in accordance with Art. 153(4) EPC

(43) Date of publication:
**19.11.2014 Bulletin 2014/47**

(21) Application number: **13735773.7**

(22) Date of filing: **11.01.2013**

(51) Int Cl.:
***G01B 9/02*** *(2006.01)*

(86) International application number:
**PCT/KR2013/000267**

(87) International publication number:
**WO 2013/105830 (18.07.2013 Gazette 2013/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.01.2012 KR 20120003401**

(71) Applicant: **KohYoung Technology Inc.
Seoul 153-706 (KR)**

(72) Inventor: **SER, Jang-Il
Gapyeong-gun
Gyeonggi-do 477-803 (KR)**

(74) Representative: **Patronus IP Patent- und
Rechtsanwälte
Neumarkter Strasse 18
81673 München (DE)**

(54) **INTERFEROMETER USING ASYMMETRIC POLARIZATION AND OPTICAL DEVICE USING THE
INTERFEROMETER**

(57) The present invention relates to an interferometer and an optical device using the same. Conventional optical devices have the disadvantage that interference patterns are not clear and there is a restriction between a light source and the interferometer, and as a result, there has been a need for a precise control device. The present invention accordingly achieves an improvement in controlling a wave plate of an interferometer so that the amplitude of an object beam which is split by a polarization beam splitter and the amplitude of a reference beam can be asymmetric to each other and thus the brightness of interference patterns can be adjusted. Further, the present invention uses a tunable laser as a light source of an optical device and adopts a frequency scanning method, to thereby prevent restrictions between the light source and the interferometer. The interferometer and optical device according to the present invention comprise: a wave plate for controlling the polarization direction of linearly polarized light incident to a polarization beam splitter; the polarization beam splitter; a wave plate for converting the polarization beam such that the object beam and the reference beam may be interfered in an image pick-up device; and a polarizer.

[Fig. 1]

## Description

[Technical Field]

The present invention relates to an interferometer and an optical device using the same, and more particularly, to an interferometer capable of controlling a contrast ratio of interference patterns due to an interference beam reaching an image pick-up device and an optical device using the same.

[Background Art]

An interferometer capable of controlling sizes of a P-polarization component and an S-polarization component of a beam incident to a polarization beam splitter using a half-wave plate according to the related art has been known.
Further, a wavelength scanning interferometer measuring a change in the number of interference patterns of an inspection beam and a reference beam while changing a wavelength of an incident beam so as to measure an optical path difference has been known.
Patent Document 1 discloses an "interferometer" for interference between the reference beam and a sample beam which are divided from the incident beam by the polarization beam splitter. The interferometer disclosed in Patent Document 1 may control a size of a beam to be incident in a direction of a mirror and a sample by rotating the half-wave plate in a progress direction of the incident beam as an axis and the reference beam reflected from the mirror and the sample beam reflected from the sample may interfere with each other by passing through a quarter-wave plate (see a description of identification number [0012] of Patent Document 1) and pass through an imaging lens and a polarizer to form the interference patterns on an image formation surface. However, the apparatus disclosed in Patent Document 1 passes the reference beam reflected from the mirror and the sample beam reflected from the sample through the quarter-wave plate to be circularly polarized and then again passes the circularly polarized reference beam and sample beam through the imaging lens and the polarizer to form the interference patterns on the image formation surface, such that a polarization direction of the reference beam and the sample beam rotates to reduce an average light quantity passing through the polarizer, thereby making the interference patterns formed on the image formation surface dark on average.
Patent Document 2 discloses a 'wavelength scanning interferometer' which calculates the optical path difference based on the relationship between the change in the number of interference patterns formed by the inspection beam and the reference beam while changing the wavelength of the incident beam and a wavelength variation of the incident beam. For example, if n interference patterns are detected at wavelength $\lambda$ and when a wavelength is increased bit by bit to be increased by $\Delta\lambda$, n-1 interference patterns are detected, the optical path difference is not changed and therefore $\lambda \cdot n = (\lambda + \Delta\lambda) \cdot (n - 1)$ may be established and $n = (\lambda + \Delta\lambda) / \Delta\lambda$ and therefore an optical path difference $1 = \lambda \cdot n = \lambda \cdot (\lambda + \Delta\lambda) / \Delta\lambda$ may be obtained. However, the apparatus disclosed in Patent Document 2 may not control the sizes of the inspection beam and the reference beam and thus may not control the contrast of the interference patterns.

Related Art Document

Patent Document

    (Patent Document 1) JP H8-285697 A (November 01, 1996)
    (Patent Document 2) US 4759628 B1 (July 26, 1988)

**[Disclosure]**

[Technical Problem]

An object of the present invention is to provide an interferometer capable of controlling a contrast of interference patterns formed by an object beam and a reference beam in an image pick-up device by controlling polarization of a beam incident to a polarization beam splitter and an optical device using the same.
Another object of the present invention is to provide a frequency scanning interferometer (FSI) which is not affected by a distance between a light source and an interferometer and does not thus require a precise control apparatus by using a tunable laser as the light source of the interferometer capable of controlling polarization of a beam incident to a polarization beam splitter and scanning the frequency of the tunable laser and an optical device using the same.
Still another object of the present invention is to provide an interferometer capable of selecting a diffused reflection surface or a mirror surface and making the selected diffused reflection surface or the mirror surface brightly display by controlling an optic axis of a wave plate in the interferometer capable of controlling polarization of a beam incident to a polarization beam splitter and an optical device using the same.

[Technical Solution]

In one general aspect, an interferometer includes: a first wave plate 370 which is disposed in a progress direction of a beam generated from a light source; a first polarization beam splitter 310 which reflects some of the beam passing through the first wave plate 370 in a first direction and transmits some of the beam in a second direction; a second wave plate 340 which is disposed in a progress direction of the beam reflected in the first direction; a third wave plate 350 which is disposed in the progress direction of the beam transmitted in the second direction; a measurement object 320 which is disposed in the progress direction of the beam passing through the second wave plate 340; a reference mirror 330 which is disposed in the progress direction of the beam passing through the third wave plate 350; and a first polarizer 360 which passes the beam reflected from the measurement object 320 through the second wave plate 340, passes the beam transmitting the first polarization beam splitter 310 and the beam reflected from the reference mirror 330 through the third wave plate 350, and then is disposed in the progress direction of the beam reflected from the first polarization beam splitter 310.

In another general aspect, an interferometer includes: a first wave plate 370 which is disposed in a progress direction of a beam generated from a light source; a first polarization beam splitter 310 which reflects some of the beam passing through the first wave plate 370 in a first direction and transmits some of the beam in a second direction; a measurement object 320 which is disposed in the progress direction of the beam reflected in the first direction; a reference mirror 330 which is disposed in the progress direction of the beam transmitted in the second direction; a fourth wave plate 341 which is disposed in the progress direction of the beam reflected from the measurement object 320; a fifth wave plate 351 which is disposed in the progress direction of the beam reflected from the reference mirror 330; a second polarization beam splitter 311 which is disposed in the progress direction of the beam passing through the fourth wave plate 341 and the fifth wave plate 351; and a first polarizer 360 which is disposed in the progress direction of the beam transmitting the second polarization beam splitter 311.

A diffused reflection surface and a mirror surface of the measurement object may be divided by rotating an optic axis of the wave plate.

In still another general aspect, an optical device includes: a light source, an interferometer, and an image pick-up device.

The light source may be a tunable laser and an interference pattern may be measured with discrete data in the image pick-up device.

[Advantageous Effects]

According to the interferometer and the optical device in accordance with the exemplary embodiments of the present invention, the polarization direction of the beam to be incident to the polarization beam splitter is controlled and the interference beam passes through only the polarizer by rotating the optic axis of the wave plate of the interferometer, thereby controlling the contrast of the interference patterns formed by the object beam and the reference beam in the image pick-up device.

Further, the optical path difference may be measured no matter where the light source is located outside the interferometer by scanning the frequency of the tunable laser to the interferometer to remove the components for a precise control typically required to finely control the position of the light source and the interferometer, thereby simplifying the structure of the apparatus and saving the costs.

In addition, the diffused reflection surface or the mirror surface may be selected and brightly displayed only by rotating the wave plate inside the interferometer without introducing additional components.

[Description of Drawings]

The above and other objects, features and advantages of the present invention will become apparent from the following description of preferred embodiments given in conjunction with the accompanying drawings, in which:

FIG. 1 is a diagram illustrating a Michelson interferometer according to a first exemplary embodiment of the present invention;
FIG. 2 is a conceptual diagram illustrating an interference phenomenon between two beams;
FIG. 3 is a conceptual diagram illustrating a beam to be incident to a first polarization beam splitter as a vector;
FIG. 4 is a conceptual diagram illustrating that a polarization direction of a beam linearly polarized by rotating a half-wave plate in the optical device of FIG. 1 may rotate in any direction on a plane vertical to a progress direction of a beam;

FIG. 5 is a diagram illustrating a Mach-Zehnder interferometer according to a second exemplary embodiment of the present invention;

FIG. 6 is a diagram illustrating a frequency scanning optical device using a tunable laser as a light source of an interferometer;

FIG. 7 is a principle diagram of the frequency scanning interferometer;

FIG. 8 is a diagram illustrating interference pattern data measured in an image pick-up device;

FIG. 9 is a diagram illustrating the frequency scanning interferometer applied to a curved measurement object;

FIG. 10 is a diagram illustrating the interference pattern data measured in the frequency scanning interferometer of FIG. 7; and

FIG. 11 is a conceptual diagram illustrating that a diffused reflection surface and a mirror surface may be selectively emphasized according to a rotation of a second wave plate in the Michelson interferometer of FIG. 1.

[Best Mode]

Hereinafter, exemplary embodiments of the present invention will be described in detail with reference to the accompanying drawings.

[First Exemplary Embodiment]

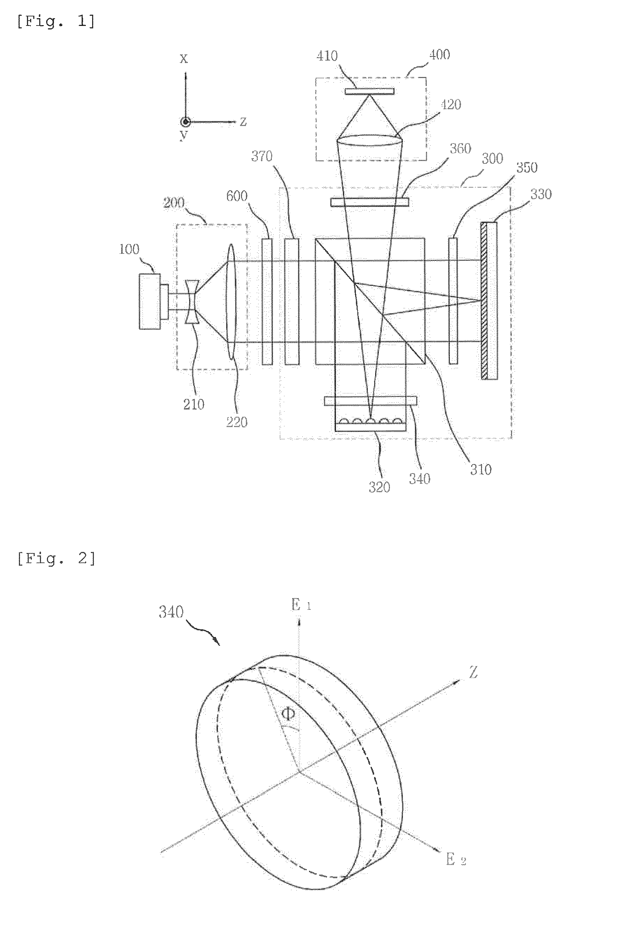

FIG. 1 illustrates an optical device using a Michelson interferometer 300 according to a first exemplary embodiment of the present invention. The optical device according to the first exemplary embodiment of the present invention includes: a light source 100, a beam width extending part 200, a Michelson interferometer 300, and an image pick-up device 400, in which the Michelson interferometer 300 includes a first wave plate 370 which is disposed in a progress direction of a beam generated from a light source; a first polarization beam splitter 310 which reflects some of the beam passing through the first wave plate 370 in a first direction and transmits some of the beam in a second direction; a second wave plate 340 which is disposed in a progress direction of the beam reflected in the first direction; a third polarizer 350 which is disposed in the progress direction of the beam transmitted in the second direction; a measurement object 320 which is disposed in the progress direction of the beam passing through the second wave plate 340; a reference mirror 330 which is disposed in the progress direction of the beam passing through the third wave plate 350; and a first polarizer 360 which passes the beam reflected from the measurement object 320 through the second wave plate 340, passes the beam transmitting the first polarization beam splitter 310 and the beam reflected from the reference mirror 330 through the third wave plate 350, and then is disposed in the progress direction of the beam reflected from the first polarization beam splitter 310.

Referring to FIG. 1, the beam (incident beam) generated from the light source 100 has an increased beam width while passing through a concave lens 210 and is progressed in parallel without being diffused or converged while passing through a convex lens 220. The concave lens 210 and the convex lens 220 serve to extend the beam width and therefore are referred to as the beam width extending part 200. If the beam width of the light source 100 sufficiently operates the interferometer, that is, when the incident beam emitted from the light source with a predetermined beam width, the beam width extending part 200 may be omitted. Further, the light source itself may have a form in which a laser is coupled with the beam width extending part 200.

The incident beam having the extended beam width passes through the first wave plate 370 to reach the first polarization beam splitter 310 and a second polarizer 600 is disposed between the beam width extending part 200 and the first wave plate 370 to make the beam reaching the first polarization beam splitter 310 certainly have linear polarization. However, when the linear polarization of the light source is sufficiently good, the second polarizer 600 is a component which may be omitted so as to simplify a structure of the interferometer.

The first polarization beam splitter 310 transmits or reflects the beam passing through the first wave plate 370 along a polarization direction to transfer some of the beam to the measurement object 320 and transfer some of the beam to the reference mirror 330. For convenience, in FIG. 1, a direction in which the beam passing through the first wave plate 370 is progressed toward the first polarization beam splitter 310 is defined as a z-axis direction, a direction in which the beam is progressed from a bottom of FIG. 1 toward a top of FIG. 1 is defined as an x-axis direction, and a direction in which the beam passes through a ground of FIG. 1 is defined as a y-axis direction. The beam reaching the first polarization beam splitter 310 is progressed in the z-axis direction and therefore a polarization component of the incident beam is located on an x-y plane Accordingly, the polarization component may be divided into a component polarized in the x-axis direction and a component polarized in the y-axis direction and when a component (P wave) which vibrates in, for example, the x-axis direction is reflected from the first polarization beam splitter 310 to be an object beam progressed to the measurement object 320, a component (S wave) which vibrates in the y-axis direction transmits the first polarization beam splitter 310 to be a reference beam progressed to the reference mirror 330.

The so divided object beam passes through the second wave plate 340 to be incident to the measurement object 320 and the reference beam passes through the third wave plate 350 to be incident to the reference mirror 330. Here, the second wave plate 340 and the third wave plate 350 serve to control the polarization of the object beam and the reference beam, in which both of the second wave plate 340 and the third wave plate 350 may be a quarter-wave plate.

The object beam passes through the second wave plate 340 prior to being progressed to the measurement object 320 and the reference beam passes through the third wave plate 350 prior to being progressed to the reference mirror 330. The reason is that if no second wave plate 320 is present, the object beam which is the P wave is reflected from the measurement object 320 and then still has only the P wave component to be again reflected from the first polarization beam splitter 310 and be lost in a direction (-z direction) of the first wave plate 370 and the reference beam which is the S wave is reflected from the reference mirror 330 and then still has only the S wave component to transmit the first polarization beam splitter 310 and be lost in the direction (-z direction) of the first wave plate 370, and therefore the object beam and the reference beam may not interfere with each other in the image pick-up device 400.

Therefore, when the object beam reflected from the first polarization beam splitter 310 is reflected from the measurement object 320 and thus again reaches the first polarization beam splitter 310, the object beam needs to transmit the first polarization beam splitter 310 and therefore needs to have the S wave component and when the reference beam transmitting the first polarization beam splitter 310 is reflected from the reference mirror 330 and thus again reaches the first polarization beam splitter 310, the reference beam needs to be reflected from the first polarization beam splitter 310 and therefore needs to have the P wave component.

However, since a condition under which the object beam may have the most S wave component is that the second wave plate 340 is the quarter-wave plate and a condition under which the reference beam may have the P wave component is that the third wave plate 350 is the quarter-wave plate, the case in which both of the second wave plate 340 and the third wave plate 350 are the quarter-wave plate will be described below. The quarter-wave plate is disposed between the first polarization beam splitter 310 and the measurement object 320 and between the first polarization beam splitter 310 and the reference mirror 330 and a detailed operation thereof will be described below. The quarter-wave plate changes a polarization state from linearly polarized beam to circularly polarized beam and changes the polarization state from the circularly polarized beam to the linearly polarized beam. Therefore, the object beam reflected from the first polarization beam splitter 310 passes through the second wave plate 340, which is the quarter-wave plate, once while the object beam reaches the measurement object 320 and passes through the second wave plate 340, which is the quarter-wave plate, once more while the object beam is reflected from the measurement object 320 and then again reaches the first polarization beam splitter 310. That is, in view of the beam, the beam passes through the quarter-wave plate twice and thus an effect of substantially passing the beam through a half-wave plate once is obtained and when an angle of an optic axis of the half-wave plate and the polarization direction of the beam is 45°, the polarization of the beam passing through the half-wave plate rotates 90°. Therefore, the object beam which is the P wave becomes the S wave due to the quarter-wave plate 340 which is located between the first polarization beam splitter 310 and the measurement object 320 and the reference beam which is the S wave becomes the P wave due to the quarter-wave plate 350 which is located between the first polarization beam splitter 310 and the reference mirror 330, such that the object beam and the reference beam are each progressed in the direction of the image pick-up device 400.

By the above process, the object beam and the reference beam emitted from the first polarization beam splitter 310 pass through the first polarizer 360 to form an interference pattern in the image pick-up device 400. Here, the reason why the object beam and the reference beam again pass through the first polarizer 360 is that the object beam and the reference beam emitted from the polarization beam splitter 310 are the P wave and the S wave and thus are vertical to each other and therefore the interference phenomenon therebetween may not be observed. The interference phenomenon occurs by making at least two beams interact with each other and is defined as an inner product of the two beams, and therefore the interference between the two beams vertical to each other becomes 0. For example, when $E_1$ is a vector of one beam and $E_2$ is a vector of another beam, the interference between the two beams becomes $E_1 \cdot E_2 = |E_1| |E_2| \cos\theta$ and when $\theta$ is 90°, the interference becomes 0 ($\theta$ is an angle between the vectors of the two beams).

Therefore, there is a need to make the object beam and the reference beam not be vertical to each other before the object beam and the reference beam reach the image pick-up device 400. This is performed by the first polarizer 360 which is located between the first polarization beam splitter 310 and the image pick-up device 400. When the beam passes through the first polarizer 360, since only the component parallel with the polarization direction of the first polarizer 360 passes through the first polarizer 360, in the case in which the first polarizer 360 is disposed so that the polarization direction of the object beam and the reference beam does not accord with the polarization direction of the first polarizer 360, the beam passing through the first polarizer 360 has only components parallel with each other, such that the image pick-up device 400 may measure the interference phenomenon having predetermined brightness.

Generally, the image pick-up device 400 is configured of an image sensor 410 and a camera lens 420 but does not greatly affect a main technical spirit of the present invention and therefore a detailed description thereof will be omitted.

FIG. 2 is a conceptual diagram illustrating the interference phenomenon between the two beams. Herein is mainly described at what ratio the sizes of the object beam and the reference beam divided by the first polarization beam splitter 310 need to set so as to finally optimize a contrast ratio of the interference pattern in the image pick-up device 400.

Under the assumption that energy per unit time of the beam (incident beam) generated from the light source is constant, the clearer the interference pattern of the object beam and the reference beam finally reaching the image pick-up device 400, that is, the larger the interfering energy, the better the performance of the interferometer.

What the interference between the two beams is equal to the inner product of the two beams is already described. Herein will be described below how the incident beam having energy per constant unit time is divided into the object beam and the reference beam so as to make the inner product of the object beam and the reference beam largest.

For convenience, the object beam emitted from the first polarization beam splitter 310 is defined as $E_1$, the reference beam is defined as $E_2$, and an angle of the $E_1$ and the polarization direction of the first polarizer 360 is defined as $\varphi$ ($E_1$ and $E_2$ are a vector quantity). Then, the $E_1$ and the $E_2$ are vertical to each other and therefore the angle of the $E_2$ and the polarization direction of the first polarizer 360 becomes 90° - $\varphi$. The $E_1$ and the $E_2$ have only the component of the size of = $|E_1|$ cos$\varphi$ and $|E_2|$ cos(90° - $\varphi$) while passing through the first polarizer 360 and pass through the same first polarizer 360, such that the angle $\theta$ between the two beams becomes 0°. Finally, therefore, the interference in the image pick-up device 400 becomes = $|E_1|$ cos$\varphi$ and $|E_2|$ cos (90° - $\varphi$). That is, it may be appreciated herein that the angle of the object beam vector and the polarization direction of the first polarizer 360 is 45°, the interference efficiency is best and under the condition, the reference beam vector also forms the angle of 45° with respect to the polarization direction of the first polarizer 360. Meanwhile, to make the polarization efficiency optimize, the values of the = $|E_1|$ and $|E_2|$ also need to be increased, which means a product of the size of the object beam vector and the size of the reference beam vector.

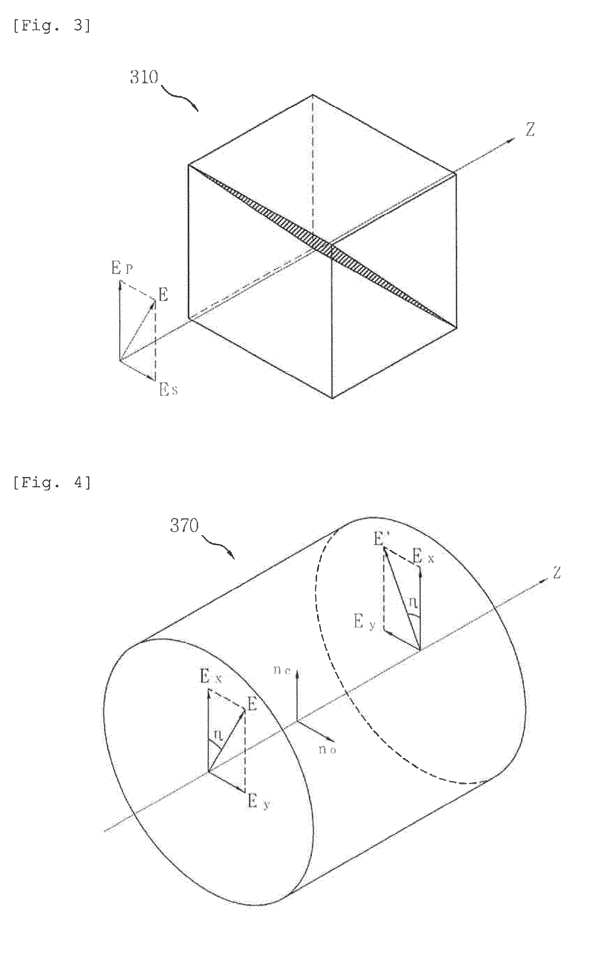

FIG. 3 illustrates that the beam incident to the first polarization beam splitter 310 may be divided into the P wave component and the S wave component. For convenience, when the P wave component is set to be $E_P$ and the S wave component is set to be $E_S$, the incident beam is represented by $E = E_P + E_S$ ($E$, $E_P$, and $E_S$ are a vector quantity).

First, the $E_S$ is the reference beam progressed to the reference mirror 330 and therefore transmits the first polarization beam splitter 310 and then passes through the third wave plate 350 which is the quarter-wave plate to be reflected from the reference mirror 330 and again passes through the third wave plate 350 which is the quarter-wave plate and is then reflected from the first polarization beam splitter 310 to be progressed toward the image pick-up device 400. In this case, the reference mirror 330 reflects most incident beam and therefore approximates a reflectance of 1.

Next, since the $E_P$ is the object beam progressed to the measurement object 320, the $E_P$ is reflected from the first polarization beam splitter 310 to pass through the second wave plate 340 which is the quarter-wave plate and be reflected from the measurement object 320 and then again passes through the second wave plate 340 which is the quarter wave plate to transmit the first polarization beam splitter 310 and then be progressed toward the image pick-up device 400. However, unlike the mirror, the measurement object 320 may have any value between reflectance 0 and 1 and therefore the object beam after being reflected from the measurement object 320 becomes a value obtained by multiplying reflectance r by the object beam before being reflected. That is, the sizes of the object beam and the reference beam which are incident to the first polarization beam splitter 310 each are $r|E_P|$ and $|E_S|$.

Generally, however, to maximize the interference effect, amplitudes of two beams needs to be the same, and therefore according to the exemplary embodiment of the present invention, the sizes of the object beam and the reference beam need to have a correlation of $r|E_P| = |E_S|$ and if an angle of an x axis and the incident beam $E$ is set to be $\alpha$, when a relational equation of tan $\alpha$ = $|E_S|$ / $|E_P|$ = r is satisfied, it may be appreciated that the interference effect achieved in the image pick-up device 400 is maximized.

That is, the angle of the incident beam $E$ and the x axis is determined depending on the reflectance r of the measurement object 320 and when various kinds of measurement objects 320 are present and therefore r is changed at all times, to change the angle of the incident beam $E$ and the x axis, the second polarizer 600 is disposed between the beam width extending part 200 and the first wave plate 370 to rotate meeting a direction of the incident beam $E$ or the light source 100 itself needs to rotate. However, when the second polarizer 600 rotates, the transmitted light quantity is small and therefore the overall efficiency is reduced and to rotate the light source 100, components for a precise control are required as well as stability may also be problematic.

Therefore, an apparatus to change the polarization direction of the incident beam $E$ while keeping the transmitted light quantity is required. Herein, the apparatus is the very first wave plate 370 and the first wave plate 370 may be a half-wave plate.

FIG. 4 illustrates the linearly polarized incident beam and the first wave plate 370. The wave plate including the first wave plate 370 has different refractive indexes according to a direction. For convenience, the refractive index of the beam polarized in an x direction is defined as $n_e$ and the refractive index of the beam polarized in a y direction is defined as $n_o$. In this case, since $n_e < n_o$, the x axis is defined as a fast axis and the y axis is defined a slow axis.

The polarization direction of the incident beam may form any angle with respect to the x axis, in which the angle is defined as $\eta$. Then, since the polarization direction of the incident beam is not the x-axis or y-axis direction, an x-axis direction component $E_x$ of the incident beam is progressed along the fast axis and a y-axis direction component $E_y$ is progressed along the slow axis. When the incident beam exits from the first wave plate 370, a phase difference occurs between the fast axis component and the slow axis component and therefore the y-axis direction component $E_y$ progressed along the slow axis by the phase difference is delayed, such that when the beam is incident to the first wave plate 370, the polarization direction is changed. FIG. 4 illustrates the case in which the first wave plate 370 is the half-wave plate. The reason why the first wave plate 370 is the half-wave plate is that the incident beam E passes through the half-wave plate and then the polarization direction rotates by 2 η clockwise and thus becomes E'.

As can be appreciated herein, when the first wave plate 370 is the half-wave plate, to rotate the polarization direction of the incident beam E by 2η, it is enough to control only η which is an angle between the polarization direction of the incident beam E and the fast axis. This may be solved by rotating the first wave plate 370 in the progress direction of the incident beam as the axis while the polarization direction of the incident beam E is fixed.

[Second Exemplary Embodiment]

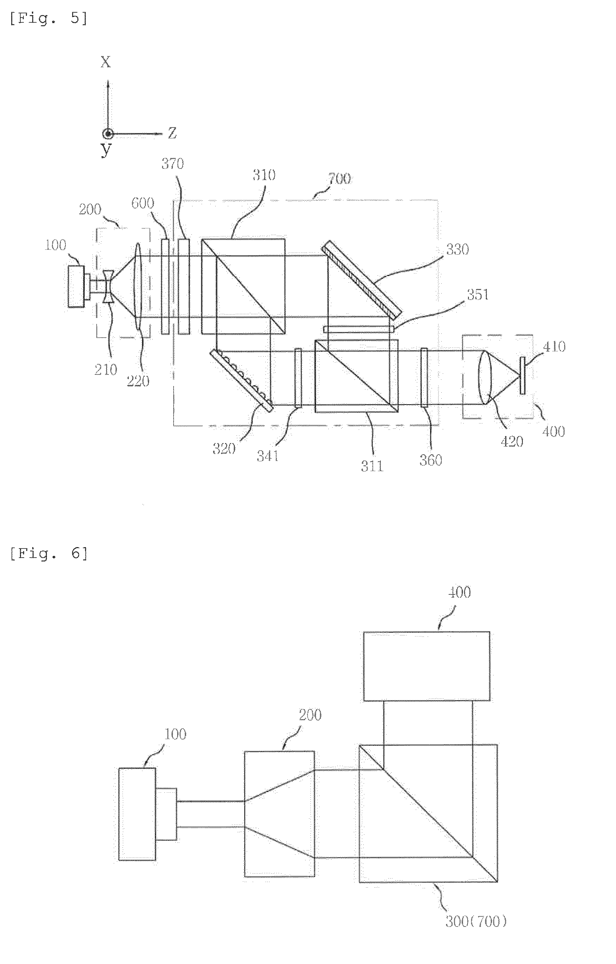

FIG. 5 illustrates an optical device using a Mach-Zehnder interferometer 700 according to a second exemplary embodiment of the present invention. The optical device according to the second exemplary embodiment of the present invention includes the light source 100, the beam width extending part 200, the Mach-Zehnder interferometer 700, and the image pick-up device 400, in which the Mach-Zehnder interferometer 700 includes: the first wave plate 370 which is disposed in the progress direction of the beam generated from the light source; the first polarization beam splitter 310 which reflects some of the beam passing through the first wave plate 370 in the first direction and transmits some of the beam in the second direction; the measurement object 320 which is disposed in the progress direction of the beam reflected in the first direction; the reference mirror 330 which is disposed in the progress direction of the beam transmitted in the second direction; a fourth wave plate 341 which is disposed in the progress direction of the beam reflected from the measurement object 320; a fifth wave plate 351 which is disposed in the progress direction of the beam reflected from the reference mirror 330; the second polarization beam splitter 311 which is disposed in the progress direction of the beam passing through the fourth wave plate 341 and the fifth wave plate 351; and the first polarizer 360 which is disposed in the progress direction of the beam transmitting the second polarization beam splitter 311.

Similar to the Michelson interferometer 300, the Mach-Zehnder interferometer 700 passes the incident beam having the extended beam width through the first wave plate 370 to reach the first polarization beam splitter 310. Some of the beam incident to the first polarization beam splitter 310 is reflected along the polarization direction to be transferred to the measurement object 320 and some is transmitted to be transferred to the reference mirror 330. The beam reflected from the measurement object 320 passes through the fourth wave plate 341 to be incident to the second polarization beam splitter 311 and the beam reflected from the reference mirror 330 passes through the fifth wave plate 351 to be incident to the second polarization beam splitter 311.

The fact that the Mach-Zehnder interferometer 700 according to the second exemplary embodiment of the present invention controls the size of the beam to be transferred to the measurement object 320 by the first wave plate 370 and the size of the beam to be transferred to the mirror reference 330 is the same as the case of the Michelson interferometer, but the Mach-Zehnder interferometer 700 has a different structure from the Michelson interferometer in that since the beams reflected from the measurement object 320 and the reference mirror 330 are not again incident to the first polarization beam splitter 310, the second polarization beam splitter 311 is disposed on the optical path to make the beam reflected from the measurement object 320 and the beam reflected from the reference mirror 330 interfere with each other. Further, in the Mach-Zehnder interferometer 700, the beam incident to the measurement object 320 and the beam incident to the reference mirror 330 are each reflected from the measurement object 320 and the reference mirror 330 and then are not progressed back to the incident path and are progressed at an angle of 90° with respect to the incident path, and therefore the first wave plate or the second wave plate is not located on the optical path but the fourth wave plate 341 or the fifth wave plate 351 is located thereon. However, in the Mach-Zehnder interferometer 700, the beam passes through the fourth wave plate 341 or the fifth wave plate 351 only once and therefore the phase delay due to the fourth wave plate 341 or the fifth wave plate 351 is two times as long as that due to the first wave plate or the second wave plate, such that the fourth wave plate 341 and the fifth wave plate 351 may be the half-wave plate.

The beam reflected from the measurement object 320 and the beam reflected from the reference mirror 330 interfere with each other in the image pick-up device 400 and the angle of the optic axis of the half-wave plates 341 and 351 and the polarization direction of the beam is 45° to rotate the polarization of the beam by 90° such that the reference beam transmitting the first polarization beam splitter 310 needs to be reflected from the second polarization beam splitter 311 and the object beam reflected from the first polarization beam splitter 310 needs to transmit the second polarization beam splitter 311.

[Third Exemplary Embodiment]

FIG. 6 illustrates the frequency scanning optical device using the tunable laser as the light source 100 of the interferometer. The frequency scanning optical device uses the tunable laser as the light source of the interferometer and measures the interference signal while changing the frequency of the beam emitted from the tunable laser to measure the optical path difference.

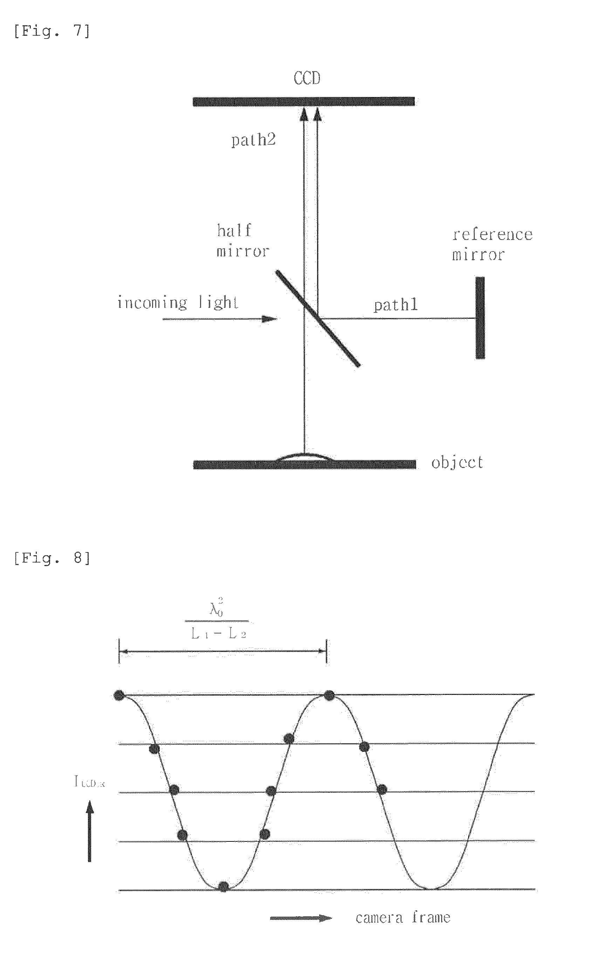

FIG. 7 illustrates a principle of the frequency scanning interferometer. The frequency is in inverse proportion to a wavelength and therefore for convenience, the third exemplary embodiment of the present invention will be described based on the wavelength. In the incident beam, $\lambda_0$ is set to be the reference wavelength and the wavelength may be changed at an interval of $\Delta\lambda$. That is, a k-th wavelength $\lambda_k$ is equal to $\lambda_0 + k (\Delta\lambda)$.

Generally, an intensity of the interference pattern formed in the image pick-up device 400 relies on a form of $I_{ccd} = I_0 + I 1\cos\varphi$. In this case, the phase difference $\varphi$ of the two beams has the following Equation 1 with an optical path $L_1$ of the object beam and an optical path $L_2$ of the reference beam.

[Equation 1]

$$\phi = \frac{2\pi}{\lambda}(L_1 - L_1) = \frac{2\pi}{\frac{\lambda^2}{(L_1 - L_2)}}\lambda$$

In the above system, when the frequency of the incident beam is changed, an intensity $I_{ccd,\,k}$ of a discrete interference pattern represented by the following Equation 2 is obtained and the phase difference $\varphi_k$ of the two beams may be approximately obtained depending on the following Equation 3.

[Equation 2]

$$I_{ccd,k} = I_0 + I_1\cos\phi_k$$

[Equation 3]

$$\phi_k = \frac{2\pi}{\frac{(\lambda_0 + k(\Delta\lambda))^2}{(L_1 - L_2)}}(\lambda_0 + K(\Delta\lambda)) = \frac{2\pi}{\frac{\lambda_2^0}{(L_1 - L_2)}}(\lambda_0 + k(\Delta\lambda))$$

However, the approximation of the above Equation 3 is an equation which is established in the case of $\Delta\lambda \ll \lambda_0$, but the typical tunable laser satisfies $\Delta\lambda \ll \lambda_0$ and therefore for convenience of calculation, the following approximate equation will be described.

FIG. 8 illustrates interference pattern data which are taken in a pixel of the image pick-up device 400, for example, a CCD. Here, to make $\varphi_k$ correspond to 1 cycle from 0 to $2\pi$, it may be appreciated from a graph of the intensity of the k-th interference pattern that an effective wavelength value $\lambda_{eff}$ needs to be the same as Equation 4.

[Equation 4]

$$\lambda_{eff} = \frac{\lambda_0^2}{(L_1 - L_2)}$$

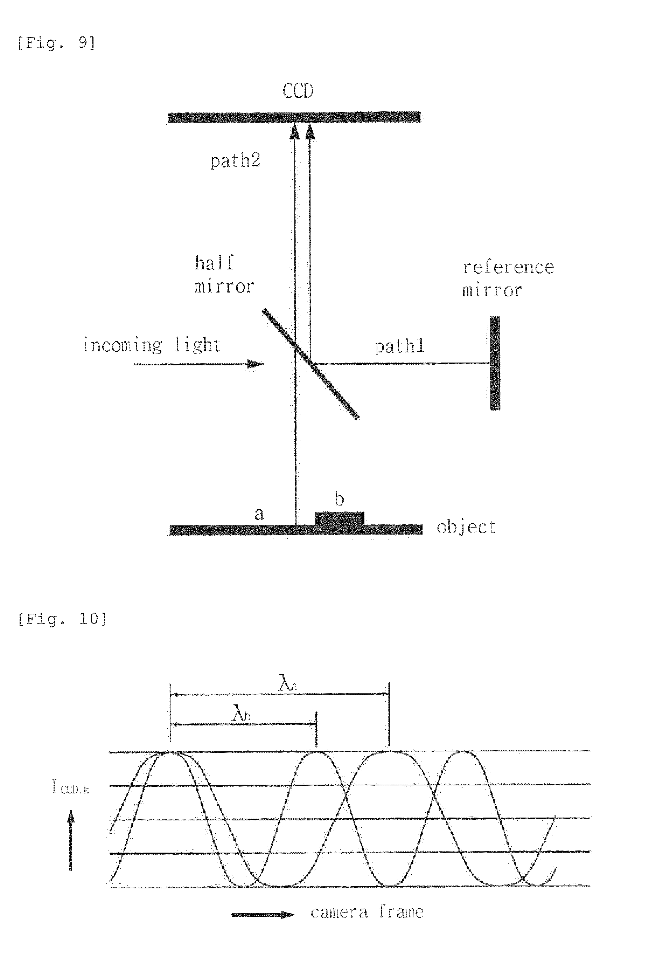

FIG. 9 illustrates the case in which the frequency scanning interferometer is applied to the curved measurement object 320. When the frequency scanning interferometer is simultaneously applied to a and b, the image data as illustrated in FIG. 10 are obtained. To obtain the effective wavelength values $\lambda_{eff}$ of each trigonometric function waveform, the frequencies of each trigonometric function waveform are obtained by using the discrete data measured by the CCD, and the like.

As a method of obtaining the frequencies of each trigonometric function waveform, a fast Fourier transform (FFT) is representatively used. The FFT method is idiomatically known and therefore the detailed description thereof will be omitted. For convenience, when the $\lambda_{eff}$ of each trigonometric function waveform obtained using the FFT, and the like is each set to be $\lambda_a$ and $\lambda_b$, the $\lambda_a$ and $\lambda_b$ depends on the following Equation 5 by the above Equation 4.

[Equation 5]

$$\lambda_a = \frac{\lambda_0^2}{L_1 - L_{2a}}, \quad \lambda_b = \frac{\lambda_0^2}{L_1 - L_{2b}}$$

Since the optical path difference 1 to be obtained is $L_{2a}$ - $L_{2b}$, the optical path difference 1 may finally be obtained based on the following Equation 6 ($L_{2a}$ is an optical path when the beam is reflected from surface a and $L_{2b}$ is an optical path when the beam is reflected from surface b).

[Equation 6]

$$l = L_{2a} - L_{2b} = \lambda_0^2 \left( \frac{1}{\lambda_b} - \frac{1}{\lambda_a} \right)$$

Using the above Equation 6, as illustrated in FIG. 9, a height h of the object b is 1/2 and therefore depends on the following Equation 7.

[Equation 7]

$$h = \frac{l}{2} = \frac{\lambda_0^2}{2} \left( \frac{1}{\lambda_b} - \frac{1}{\lambda_a} \right)$$

[Fourth Exemplary Embodiment]

In the Michelson interferometer 300 described in the first exemplary embodiment of the present invention, when the second wave plate 340 which is the quarter-wave plate disposed between the first polarization beam splitter 310 and the measurement object 320 rotates, a principle which may selectively emphasize and display the diffused reflection surface and the mirror surface is as follows.

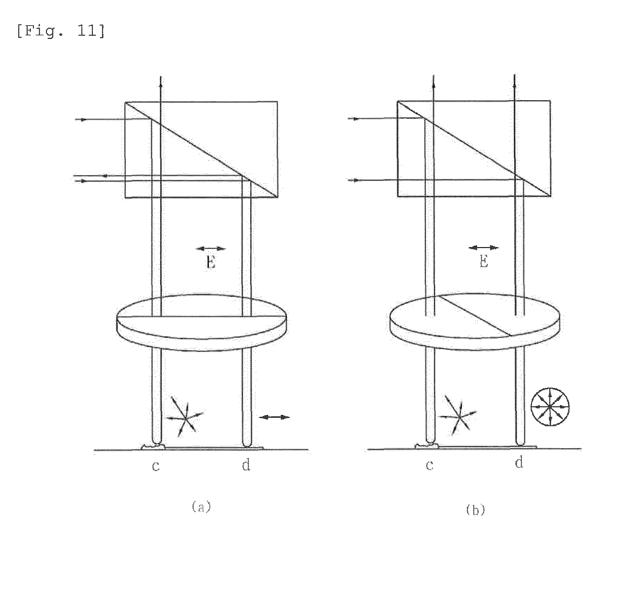

FIG. 11 illustrates the case in which the optic axis of the second wave plate 340 is parallel with the polarization direction of the beam incident from the first polarization beam splitter 310 and the case in which the optic axis of the second wave plate 340 has an angle difference of 45° from the polarization direction of the beam incident from the first polarization beam splitter 310. In region c of the measurement object 320, the diffused reflection occurs 100% and thus the polarization is lost and in region d of the measurement object 320, the reflection of the mirror surface is generated without the diffused reflection and thus the polarization is kept.
First, the case in which the optic axis of the second wave plate 340 which is the quarter-wave plate is parallel with the polarization direction of the beam incident from the first polarization beam splitter 310 will be described with reference to FIG. 11A. A beam reflected from the region c of the measurement object 320 is diffused-reflected and passes through the second wave plate 340 which is the quarter-wave plate and therefore has a component passing through the first polarization beam splitter 310, such that the interference pattern is formed in the image pick-up device 400. On the other hand, since the optic axis of the second wave plate 340 which is the quarter-wave plate is in accord with the polarization direction of the beam, a beam reflected from the region d of the measurement object 320 keeps the linearly polarized state and therefore is reflected from the first polarization beam splitter 310 and thus progressed toward the first wave plate 370 which is the half-wave plate, such that the interference pattern is not formed in the image pick-up device 400.
That is, when the optic axis of the second wave plate 340 which is the quarter-wave plate is parallel with the polarization direction of the beam incident from the first polarization beam splitter 310, only the diffused reflection surface is highlighted.

Next, the case in which the optic axis of the second wave plate 340 which is the quarter-wave plate has the angle difference of 45° from the polarization direction of the beam incident from the first polarization beam splitter 310 will be described with reference to FIG. 11B. Even in this case, the beam reflected from the region c of the measurement object 320 is diffused-reflected and passes through the second wave plate 340 which is the quarter-wave plate and therefore has the component passing through the first polarization beam splitter 310, such that the interference pattern is formed in the image pick-up device 400. However, in the region d of the measurement object 320, while the circularly polarized beam reflected from the mirror surface reciprocally passes through the second wave plate 340 which is the quarter wave plate, the polarization direction rotates with an angle difference of 90° from the case in which the circularly polarized beam is incident from the first polarization beam splitter 310 and the circularly polarized beam passes through the first polarization beam splitter 310 to form the interference pattern in the image pick-up device 400. In this case, since a light quantity of the diffusedly-reflected beam which passes through the first polarization beam splitter 310 is smaller than that of the beam reflected from the mirror surface which passes through the first polarization beam splitter 310, when the optic axis of the second wave plate 340 which is the quarter wave plate has the angle difference of 45° from the polarization direction of the beam incident from the first polarization beam splitter 310, the diffused reflection surface is suppressed and the mirror surface strongly forms the interference pattern and is highlighted.

That is, in the Michelson interferometer 300, the optic axis of the second wave plate 340 which is the quarter-wave plate disposed between the first polarization beam splitter 310 and the measurement object 320 appropriately rotates, such that it may be appreciated that the diffused reflection surface and the mirror surface are selectively highlighted.

[Fifth Exemplary Embodiment]

In the Mach-Zehnder interferometer 700 described in the second exemplary embodiment of the present invention, when the fourth wave plate 341 which is the quarter-wave plate disposed between the second polarization beam splitter 311 and the measurement object 320 rotates, a principle which may selectively emphasize and display the diffused reflection surface and the mirror surface is the same as that of the Michelson interferometer and therefore will be simply described.

Similar to the case of the Michelson interferometer 300, when the beam reflected from the first polarization beam splitter 310 is incident to the measurement object 320, the beam reflected from the diffused reflection surface has the lost polarization and the beam reflected from the mirror surface has the linear polarization as it is. Therefore, when the optic axis of the fourth wave plate 341 which is the half-wave plate disposed between the second polarization beam splitter 311 and the measurement object 320 is parallel with the beam reflected from the mirror surface, only some of the beam reflected from the diffused reflection surface passes through the second polarization beam splitter 311 to form the interference pattern, such that the diffused reflection surface is highlighted. To the contrary, when the optic axis of the fourth wave plate 341 which is the half-wave plate disposed between the second polarization beam splitter 311 and the measurement object 320 rotates with the angle of 45° with respect to the beam reflected from the mirror surface, some of the beam reflected from the diffused reflection surface passes through the second polarization beam splitter 311 but most of the beam reflected from the mirror surface passes through the second polarization beam splitter 311 to form the interference pattern, such that the mirror surface is highlighted.

Therefore, in the Mach-Zehnder interferometer 700, the optic axis of the fourth wave plate 341 which is the quarter-wave plate disposed between the second polarization beam splitter 311 and the measurement object 320 appropriately rotates, such that it may be appreciated that the diffused reflection surface and the mirror surface are selectively highlighted.

[Detailed Description of Main Elements]

100: Light source 200: Beam width extending part
210: Concave lens 220: Convex lens
300: Michelson interferometer 310: First polarization beam splitter
311: Second polarization beam splitter 320: Measurement object
330: Reference mirror 340: Second wave plate
341: Fourth wave plate 350: Third wave plate
351: Fifth wave plate 360: First polarizer
370: First wave plate 400: Image pick-up device
410: Image sensor 420: Camera lens
600: Second polarizer 700: Mach- Zehnder interferometer

**Claims**

1. An interferometer, comprising:

   a first wave plate 370 which is disposed in a progress direction of a beam generated from a light source;
   a first polarization beam splitter 310 which reflects some of the beam passing through the first wave plate 370 in a first direction and transmits some of the beam in a second direction;
   a second wave plate 340 which is disposed in a progress direction of the beam reflected in the first direction;
   a third wave plate 350 which is disposed in the progress direction of the beam transmitted in the second direction;
   a measurement object 320 which is disposed in the progress direction of the beam passing through the second wave plate 340;
   a reference mirror 330 which is disposed in the progress direction of the beam passing through the third wave plate 350; and
   a first polarizer 360 which passes the beam reflected from the measurement object 320 through the second wave plate 340, passes the beam transmitting the first polarization beam splitter 310 and the beam reflected from the reference mirror 330 through the third wave plate 350, and then is disposed in the progress direction of the beam reflected from the first polarization beam splitter 310.

2. An interferometer, comprising:

   a first wave plate 370 which is disposed in a progress direction of a beam generated from a light source;
   a first polarization beam splitter 310 which reflects some of the beam passing through the first wave plate 370 in a first direction and transmits some of the beam in a second direction;
   a measurement object 320 which is disposed in the progress direction of the beam reflected in the first direction;
   a reference mirror 330 which is disposed in the progress direction of the beam transmitted in the second direction;
   a fourth wave plate 341 which is disposed in the progress direction of the beam reflected from the measurement object 320;
   a fifth wave plate 351 which is disposed in the progress direction of the beam reflected from the reference mirror 330;
   a second polarization beam splitter 311 which is disposed in the progress direction of the beam passing through the fourth wave plate 341 and the fifth wave plate 351; and
   a first polarizer 360 which is disposed in the progress direction of the beam transmitting the second polarization beam splitter 311.

3. The interferometer of claim 1 or 2, wherein the transmitted beam and the reflected beam by the first polarization beam splitter 310 have different light quantities.

4. The interferometer of claim 1, wherein the first wave plate 370 is a half-wave plate and the second wave plate 340 and the third wave plate 350 are a quarter-wave plate.

5. The interferometer of claim 1, wherein the second wave plate 340 rotates an optic axis to divide a diffused reflection surface and a mirror surface of the measurement object 320.

6. The interferometer of claim 2, wherein the first wave plate 370, the fourth wave plate 341, and the fifth wave plate 351 are a half-wave plate.

7. The interferometer of claim 2, wherein the fourth wave plate 341 rotates an optic axis to divide a diffused reflection surface and a mirror surface of the measurement object 320.

8. An optical device, comprising:

   a light source 100;
   the interferometer of claim 1 or 2; and
   an image pick-up device 400 which images a beam emitted from the interferometer to acquire an interference pattern.

9. The optical device of claim 8, wherein a second polarizer 600 is disposed between the light source 100 and the interferometer.

10. The optical device of claim 9, wherein a beam width extending part 200 is disposed between the light source 100 and the second polarizer 600.

11. The optical device of claim 10, wherein the light source 100 is a laser and the laser is integrally formed with the beam width extending part 200.

12. The optical device of claim 10 or 11, wherein the beam width extending part 200 is configured to include a concave lens 210 and a convex lens 220.

13. The optical device of claim 8, wherein the light source 100 is a tunable laser and the image pick-up device 400 measures the interference pattern with discrete data.

14. The optical device of claim 13, wherein an optical path difference 1 between measurement objects having different heights generated by the interferometer is measured based on a result obtained by performing fast Fourier transform (FFT) on the discrete data

15. The optical device of claim 14, wherein the optical path difference 1 between the measurement objects having different heights is obtained by the following Equation (here, $\lambda_0$ is a reference wavelength of a parallel beam and $\lambda_a$ and $\lambda_b$ each are wavelength values obtained by performing the fast Fourier transform on the discrete data measured from the measurement objects each having different heights; however, $\lambda_a > \lambda_b$).

[Equation]

$$l = \lambda_0^2 \left( \frac{1}{\lambda_b} - \frac{1}{\lambda_a} \right)$$

[Fig. 1]

[Fig. 2]

[Fig. 3]

310

Z

E p

E

E s

[Fig. 4]

370

E'

E x

E y

η

Z

E x

E

E y

η

n e

n o

[Fig. 5]

[Fig. 6]

[Fig. 7]

CCD

path2

half
mirror

reference
mirror

incoming light

path1

object

[Fig. 8]

$$\frac{\lambda_0^2}{L_1 - L_2}$$

$I_{\omega,x}$

camera frame

[Fig. 9]

[Fig. 10]

[Fig. 11]

(a)                    (b)

## INTERNATIONAL SEARCH REPORT

International application No.

**PCT/KR2013/000267**

| A. CLASSIFICATION OF SUBJECT MATTER |
| --- |
| ***G01B 9/02(2006.01)i*** |
| According to International Patent Classification (IPC) or to both national classification and IPC |

| B. FIELDS SEARCHED |
| --- |
| Minimum documentation searched (classification system followed by classification symbols)<br>G01B 9/02; G01B 11/24; G01B 11/00 |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br>eKOMPASS (KIPO internal) & Keywords: interferometer, polarization beam splitter, wave plate, meausured object, reference mirror, polarizing plate, image pickup device, light source, laser, beam width extension unit, concave lens, convex lens, discrete data |

| C. DOCUMENTS CONSIDERED TO BE RELEVANT | | |
| --- | --- | --- |
| Category* | Citation of document, with indication, where appropriate, of the relevant passages | Relevant to claim No. |
| Y<br>A | JP 11-325816 A (NIKON CORP) 26 November 1999<br>See abstract, paragraph 8 and figure 1. | 1,3,8-12<br>2,4-7,13-15 |
| Y<br>A | KR 10-2009-0121885 A (KOREA RESEARCH INSTITUTE OF STANDARDS AND SCIENCE) 26 November 2009<br>See abstract, claim 1 and figure 1. | 1,3,8-12<br>2,4-7,13-15 |
| Y<br>A | US 6690473 B1 (STANKE; Fred E. et al.) 10 February 2004<br>See paragraph 9 and figure 6. | 9-12<br>1-8,13-15 |
| A | JP 07-324908 A (NIKON CORP) 12 December 1995<br>See abstract and figure 1. | 1-15 |

| ☐ Further documents are listed in the continuation of Box C. | ☒ See patent family annex. |
| --- | --- |

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |
| Date of the actual completion of the international search<br><br>15 APRIL 2013 (15.04.2013) | Date of mailing of the international search report<br><br>**16 APRIL 2013 (16.04.2013)** |
| Name and mailing address of the ISA/KR<br>Korean Intellectual Property Office<br>Government Complex-Daejeon, 189 Seonsa-ro, Daejeon 302-701,<br>Republic of Korea<br>Facsimile No. 82-42-472-7140 | Authorized officer<br><br><br>Telephone No. |

Form PCT/ISA/210 (second sheet) (July 2009)

INTERNATIONAL SEARCH REPORT
Information on patent family members

International application No.

**PCT/KR2013/000267**

| Patent document cited in search report | Publication date | Patent family member | Publication date |
|---|---|---|---|
| JP 11-325816 A | 26.11.1999 | NONE | |
| KR 10-2009-0121885 A | 26.11.2009 | NONE | |
| US 6690473 B1 | 10.02.2004 | AU 2000-41758 A1 | 09.10.2000 |
| | | EP 1163488 A1 | 19.12.2001 |
| | | JP 2002-540388 A | 26.11.2002 |
| | | TW 493205 A | 01.07.2002 |
| | | US 2003-184742 A1 | 02.10.2003 |
| | | US 2004-0080757 A1 | 29.04.2004 |
| | | US 2005-0128490 A1 | 16.06.2005 |
| | | US 6563586 B1 | 13.05.2003 |
| | | US 6829054 B2 | 07.12.2004 |
| | | US 6919958 B2 | 19.07.2005 |
| | | US 7042580 B1 | 09.05.2006 |
| | | US 7177019 B2 | 13.02.2007 |
| | | WO 00-57127 A1 | 28.09.2000 |
| JP 07-324908 A | 12.12.1995 | JP 3367209 B2 | 14.01.2003 |
| | | US 05563706 A | 08.10.1996 |

20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H8285697 A
- US 4759628 B1